# EUROPÄISCHE PATENTANMELDUNG

(11) **EP 4 702 874 A1**
(43) Veröffentlichungstag der Anmeldung: **04.03.2026**
(21) Anmeldenummer: 24197337.9
(22) Anmeldetag: 29.08.2024
(51) Int. Cl.: A47B 9/12, A47B 9/02, F16G 1/18, F16G 1/28

(54) **TELESKOPANTRIEB MIT EINEM HYBRIDRIEMEN FÜR EIN HÖHENVERSTELLBARES TISCHGESTELL**

(71) Anmelder: Veyhl GmbH, 75389 Neuweiler (DE)
(72) Erfinder: WURSTER, Timo, 72226 Simmersfeld (DE)
(74) Vertreter: Kohler Schmid Möbus Patentanwälte

(57) **Zusammenfassung**

Die Erfindung betrifft einen Riemen (34) mit zwei Segmenten. Ein erstes Segment (48) des Riemens ist mit Eingriffselementen versehen, für ein formschlüssiges Zusammenwirken mit Gegeneingriffselementen eines Antriebsritzels. Ein zweites Segment (50) des Riemens weist entlang seiner Längenerstreckung eine konstante Dicke auf - es ist mit anderen Worten glatt. Eine Umlenkrolle (38) dient zur Umlenkung des Riemens im Bereich des zweiten Segments (50). In einer teleskopierbaren Säule (14) sind das Antriebsritzel (36) und die Umlenkrolle (38) an einem der beiden Säulenteile (24, 26) befestigt. Der Riemen (34) ist zwischen dem Antriebsritzel (36) und der Umlenkrolle (38) an einer Stelle an dem zweiten Säulenteil (26) befestigt. Diese Befestigungsstelle (44) bewegt sich beim Ein- und Ausfahren der Säulenteile zwischen dem Antriebsritzel (36) und der Umlenkrolle (38). Das Antriebsritzel (36) wird dann vom Riemen (34) gedreht. Umgekehrt verschiebt eine Drehung des Antriebsritzels (36) die Säulenteile gegeneinander. Eine zweite derartige Säule (14) kann durch eine mit dem jeweiligen Antriebsritzel verbundene Welle (42) mit der ersten Säule (14) synchronisiert werden, sodass die Längen beider Säulen sich stets gemeinsam ändern. Die beiden Säulen (14) können bei einem Tischgestell (12) eines höhenverstellbaren Tischs verwendet werden.

## Beschreibung

### Hintergrund der Erfindung

Die Erfindung betrifft ein Tischgestell aufweisend zwei teleskopierbare Säulen mit je zwei relativ zueinander verschieblichen Säulenteilen, wobei jeweils an einem ersten Säulenteil der beiden Säulen ein Antriebsritzel eines jeweiligen Teleskopantriebs drehbar gelagert ist, über welches ein Riemen des jeweiligen Teleskopantriebs geführt ist, wobei eine Welle zur Drehkopplung der beiden Antriebsritzel vorgesehen ist, und wobei die Riemen jeweils an einem zweiten der Säulenteile befestigt sind.

Ein solches Tischgestell ist aus DE 10 2009 007 125 A1 bekannt. Hierbei ist der Riemen als ein Zahnriemen ausgebildet und über zwei voneinander beabstandete Zahnräder geführt, die beide an dem ersten Säulenteil befestigt sind. Das erste Säulenteil ist innerhalb eines zweiten Säulenteils geführt und ragt nach oben aus diesem heraus. Schubstangen greifen jeweils von dem unteren, zweiten Säulenteil aus an dem unteren Zahnrad vorbei und sind an dem Zahnriemen befestigt. Bei einer Längenänderung der Säulen durch Ein- oder Ausfahren der Säulenteile relativ zueinander werden somit die Zahnräder von dem Riemen in Drehbewegung versetzt. Umgekehrt erzwingt eine Drehbewegung der Zahnräder eine Längenänderung der Säulen. Die oberen Zahnräder sind zur Synchronisierung der Längenänderung der beiden Säulen über eine Welle miteinander verbunden. Zur Unterstützung der Höhenverstellung ist eine Gasdruckfeder in einer der Säulen angeordnet.

Ein ähnliches Tischgestell ist aus DE 10 2013 208 559 A1 bekannt.

Es sind ferner höhenverstellbare Tische mit elektromotorisch teleskopierbaren Säulen hinlänglich bekannt. Die Säulen werden dabei jeweils durch einen Elektromotor in ihrer Länge verändert. Eine synchrone Längenänderung kann durch geeignete Ansteuerung der Elektromotoren erreicht werden.

Insbesondere bei höhenverstellbaren Tischen, die Gasdruckfedern zur Kompensation der Gewichtskraft einsetzen, ist hingegen eine mechanische Synchronisation der Längenänderung der beiden Säulen erforderlich. Diese kann wie zuvor erläutert mittels zweier Riementriebe, die über eine Welle gekoppelt sind, erfolgen.

Da bei solchen Tischen die Tischplatte bei der Höhenverstellung manuell angehoben oder hinuntergedrückt wird, kann spürbare Reibung im System die Qualitätsanmutung des Tischs beeinträchtigen. Zudem kann übermäßige Reibung die Geschwindigkeit der Höhenverstellung verringern und es erschweren, eine gewünschte Höhe des Tischs präzise einzustellen.

### Aufgabe der Erfindung

Es ist eine Aufgabe der Erfindung, eine geschmeidige Höhenverstellung von Tischen zu ermöglichen.

### Beschreibung der Erfindung

Diese Aufgabe wird erfindungsgemäß gelöst durch ein Tischgestell gemäß Anspruch 1, eine telskopierbare Säule nach Anspruch 17 und einen Tisch gemäß Anspruch 18. Vorteilhafte Ausführungsformen sind in den Unteransprüchen und der Beschreibung angegeben.

Das erfindungsgemäße Tischgestell weist zwei teleskopierbare Säulen mit je zwei relativ zueinander verschieblichen Säulenteilen auf. Durch Ineinanderschieben bzw. Auseinanderziehen der beiden Säulenteile kann die Länge der jeweiligen Säule und somit die Höhe des Tischgestells verändert werden. Die Säulenteile können durch Hohlprofile gebildet sein. Die Hohlprofile können einen rechteckigen, runden oder ovalen Querschnitt aufweisen. Auch Freifrom-Querschnitte sind denkbar.

In beiden Säulen ist jeweils ein Teleskopantrieb vorgesehen. Die Teleskopantriebe der beiden Säulen sind miteinander gekoppelt, um eine synchrone Längenveränderung der Säulen zu bewirken.

An einem ersten, insbesondere oberen, Säulenteil der beiden Säulen sind jeweils ein Antriebsritzel und eine Umlenkrolle des jeweiligen Teleskopantriebs drehbar gelagert. Achsen des Antriebsritzels und der Umlenkrolle können unmittelbar an dem ersten Säulenteil befestigt sein. Alternativ können die Achsen an einer Halteschiene befestigt sein, welche ihrerseits an dem jeweiligen ersten Säulenteil befestigt ist.

Richtungsangaben wie oben oder unten beziehen sich für die Beschreibung der vorliegenden Erfindung auf eine Gebrauchsstellung des Tischgestells.

Über das Antriebsritzel und die Umlenkrolle ist ein Riemen des jeweiligen Teleskopantriebs geführt. Die Riemen sind jeweils an einem zweiten, insbesondere unteren, der Säulenteile befestigt. Eine Längenänderung der jeweiligen Säule versetzt somit über den Riemen das Antriebsritzel und die Umlenkrolle in Drehung. Umkehrt bewirkt eine Drehung des Antriebsritzels über den Riemen eine Verschiebung der Säulenteile relativ zueinander.

Zur Drehkopplung der beiden Antriebsritzel ist eine Welle vorgesehen. Im montierten Zustand ist durch die Welle des Tischgestells eine Drehkopplung die beiden Antriebsritzel eingerichtet. Die Antriebsritzel können sich dann nur gemeinsam drehen. Derart sind die beiden Teleskopantriebe, und mithin die beiden Säulen, miteinander synchronisiert. Die Antriebsritzel dienen somit einerseits bei einer Längenänderung einer der Säulen zum Antreiben der Welle und anderseits bei einer Drehung der Welle zum Antreiben des Riemens, um eine Längenänderung der jeweiligen Säule zu bewirken.

Für die Beschreibung der vorliegenden Erfindung wird der Begriff des Riemens allgemein für das Zugmittel eines Zugmitteltriebs verwendet. Der Riemen ist im Allgemeinen nur auf Zug belastbar. Bei Zugbelastung ist der Riemen steif. Gegenüber Biegebelastungen in der Ebene des Riemens ist der Riemen nachgiebig bzw. weich; der Riemen kann somit um das Antriebsritzel und die Umlenkrolle geführt werden, deren Achsen sich senkrecht zur Riemenebene erstrecken.

Der Riemen kann umfänglich geschlossen sein. Alternativ kann der Riemen zwei offene Enden aufweisen, die beide mit dem zweiten Säulenteil verbunden sind, um einen funktional geschlossenen Zugmitteltrieb zu erhalten.

Die Antriebsritzel und die Welle sind typischerweise am vom zweiten Säulenteil abgewandten Ende der beiden ersten Säulenteile angeordnet, insbesondere am oberen Ende der Säulen. Die Umlenkrollen sind typischerweise im Überlappungsbereich der beiden Säulenteile angeordnet.

Erfindungsgemäß ist an zumindest einem der Riemen, vorzugsweise an beiden Riemen, ein erster Riemenabschnitt mit Eingriffselementen ausgebildet. Die Eingriffselemente wirken formschlüssig mit Gegeneingriffselementen des Antriebsritzels zusammen. Mit anderen Worten greifen die Eingriffselemente und die korrespondierende Gegeneingriffselemente wechselseitig ineinander, um in Umfangsrichtung des Riemens die formschlüssige Kopplung zwischen dem ersten Riemenabschnitt und dem Antriebsritzel zu bewirken. Derart wird Schlupf zwischen dem Riemen und dem Antriebsritzel verhindert. Die Teleskopierbewegungen der Säulen werden präzise synchronisiert.

Weiter erfindungsgemäß ist an dem zumindest einen Riemen, vorzugsweise an beiden Riemen, ein zweiter, glatter Riemenabschnitt ausgebildet, der über die Umlenkrolle geführt ist. Der glatte Riemenabschnitt weist keine Eingriffselemente zum Zusammenwirken mit den Gegeneingriffselementen des Antriebsritzels auf. Auch die Umlenkrolle ist an ihrem Umfang vorzugsweise glatt. Insbesondere weist der zweite Riemenabschnitt keine zu der Umlenkrolle hin und vorzugsweise auch keine von der Umlenkrolle weg gerichteten Erhöhungen (Zähne oder dergleichen) auf. Auch die Umlenkrolle weist an ihrem Umfang grundsätzlich keine in radialer Richtung vorstehenden und in Umfangsrichtung aufeinanderfolgenden Erhöhungen (wie Zähne) auf.

Die Erfinder haben erkannt, dass durch einen derart in zwei Segmente unterteilten Hybrid-Riemen die Reibung beim Umlaufen des Riemens gegenüber einem herkömmlichen, durchgängig verzahnten Riemen, signifikant verringert werden kann. Es wird somit ein besonders leichtgängig höhenverstellbares Tischgestell erhalten. Es kommt hinzu, dass bei Tischgestellen aus Gründen des begrenzten Bauraums oft nur kleine Umlenkrollen bzw. Umlenkritzel für herkömmliche Zahnriemen verwendet werden. Dies bedingt einerseits große Biegewinkel am Riemen, was bei herkömmlichen Zahnriemen die Reibungsverluste weiter erhöht. Andererseits werden mit kleineren Umlenkritzeln und durchgängig verzahnten Zahnriemen oder Ketten die einzelnen Zahneingriffe zunehmend spürbar, was als rauer Lauf empfunden wird. Die Erfindung vermeidet diese nachteiligen Effekte. Die glatte Gestaltung sowohl des zweiten Riemenabschnitts als auch der Umlenkrolle ermöglicht reibungsarme und gleichmäßige, ruckfreie Bewegungen auch bei besonders kleinen Umlenkradien. Die Höhenverstellung wird als weniger träge wahrgenommen. Zusammenfassend kann dem Benutzer eine ergonomische, komfortable und leichtgängige Verstellung der Höhe des Tischgestells ermöglicht werden.

Die Umlenkrolle kann eine am Umfang umlaufende Nut mit zwei seitlichen Flanschen aufweisen. Der zweite Riemenabschnitt greift zwischen den Flanschen in die Nut ein. Derart kann ein Ablaufen des Riemens von der Umlenkrolle vermieden werden.

Eine Länge der beiden Riemenabschnitte kann je wenigstens 25 cm, insbesondere je wenigstens 40 cm, betragen. Die Länge der beiden Riemenabschnitte kann je wenigstens 40 %, insbesondere je wenigstens 45 %, der Gesamtlänge des jeweiligen Riemens betragen. Typischerweise sind der erste und zweite Riemenabschnitt annähernd gleich lang. Die Gesamtlänge des Riemens kann höchstens 2 m, insbesondere höchstens 1,5 m, betragen. Typischerweise sind ferner beide Riemen gleich lang.

Ein Riemen mit einem ersten Riemenabschnitt mit Eingriffselementen und einem zweiten, glatten Riemenabschnitt wird (unabhängig von dem Tischgestell und der teleskopierbaren Säule) als selbständig schutzfähige Erfindung angesehen. Die Erfindung betrifft auch einen solchen Riemen.

Ebenso wird ein Riementrieb mit einem Riemen und einem Antriebsritzel und einer Umlenkrolle, wobei ein erster Riemenabschnitt des Riemens mit Eingriffselementen ausgebildet ist, die formschlüssig mit Gegeneingriffselementen des Antriebsritzels zusammenwirken können, und wobei an dem Riemen ein zweiter, glatter Riemenabschnitt ausgebildet ist, der über die Umlenkrolle führbar ist, als (unabhängig von dem Tischgestell und der teleskopierbaren Säule) selbständig schutzfähige Erfindung angesehen. Die Erfindung betrifft auch einen solchen Riementrieb.

Der erste Riemenabschnitt kann als Zahnriemen, gelochtes Band, insbesondere gelochtes Stahlband, Noppenband oder Kette ausgebildet sein. Die Zähne des Zahnriemens, Löcher des Lochbands, Noppen des Noppenbands oder Rollen bzw. Bolzen der Kette bilden dann die Eingriffselemente des ersten Riemenabschnitts. Zahnriemen mit kunststoffummantelten Stahl- oder Aramidfasern sind besonders vorteilhaft, da sie eine hohe Längssteifigkeit und Festigkeit mit weichem Laufverhalten kombinieren.

Das Antriebsritzel kann entsprechend als Zahnrad mit Zähnen als Gegeneingriffselementen für einen Zahnriemen, ein Lochband oder eine Kette ausgebildet sein. Für ein Noppenband weist das Antriebsritzel zu den Noppen korrespondierende Vertiefungen als Gegeneingriffselemente auf.

Der zweite Riemenabschnitt kann als Seil, insbesondere Drahtseil oder Kunstfaserseil, vorzugsweise mit Aramidfasern, oder als Flachband, insbesondere aus Stahl oder faserverstärktem Kunststoff, ausgebildet sein. Die Umlenkrolle kann entsprechend als Seilscheibe oder Riemenscheibe ausgebildet sein. Ein Seil zeichnet sich durch besonders geringen Biegewiderstand und Bauraumbedarf aus.

Das zweite Säulenteil ist vorteilhaft innerhalb des ersten Säulenteils geführt. Dies vereinfacht die Befestigung des Riemens am zweiten Säulenteil. Das Antriebsritzel und die Umlenkrolle können über eine Halteschiene am ersten Säulenteil befestigt sein, wobei die Halteschiene sich in das zweite Säulenteil hineinerstreckt.

Alternativ kann das erste Säulenteil innerhalb des zweiten Säulenteils geführt sein. Dies kann die Befestigung des Antriebsritzels und der Umlenkrolle am ersten Säulenteil vereinfachen. Ein Befestigungsstab kann vom äußeren, zweitem Säulenteil aus an der Umlenkrolle vorbei ins erste Säulenteil hineinragen. Der Riemen ist dann am freien Ende des Befestigungsstabs befestigt.

Der Riemen kann in sich umfänglich geschlossenen sein und in dem ersten Riemenabschnitt als Zahnriemen und in dem zweiten Riemenabschnitt als Flachriemen ausgebildet sein. Der Riemen kann mit anderen Worten ein umfänglich geschlossener, teilverzahnter Riemen sein. Stahl- oder Kunstfasern zur Verstärkung können sich über beide Riemenabschnitte hinweg erstrecken. Eine Ummantelung der Verstärkungsfasern kann aus Kunststoff bestehen. Auch die Zähne des ersten Riemenanschnitts können aus diesem Kunststoff bestehen. Die Zähne können innerhalb des Kunststoffs Einlegeteile aus steiferem Material aufweisen.

Alternativ kann vorgesehen sein, dass der erste und der zweite Riemenabschnitt durch voneinander separate Teilstücke gebildet sind. Dies ermöglicht eine größere Freiheit bei der Gestaltung der beiden Teilstücke. Insbesondere kann ein besonders flexibles bzw. reibungsarm biegbares Material für den zweiten Riemenabschnitt gewählt werden.

Die Teilstücke sind zumindest in einem ihrer jeweiligen Endbereiche miteinander verbunden. Vorzugsweise sind die Teilstücke je beidenends miteinander verbunden, sodass ein insgesamt geschlossener Riemen erhalten ist.

Wenn die beiden Riemenabschnitte nur an einem ihrer jeweiligen Enden mit dem anderen Riemenabschnitt verbunden sind, sind freie Enden der beiden Teilstücke (welche freien Enden des zusammengesetzten Riemens entsprechen) jeweils an dem zweiten Säulenteil befestigt. Die beiden freien Enden können insbesondere separat voneinander an dem zweiten Säulenteil befestigt sein.

Ein erstes Koppelelement kann erste Enden der, insbesondere voneinander separaten, Riemenabschnitte miteinander verbinden. Die ersten Enden der beiden Riemenabschnitte können hierzu an dem Koppelement befestigt werden. Beispielsweise kann ein als Seil ausgebildeter zweiter Riemenabschnitt einen gegenüber dem Seil verdickten Nippel aufweisen, der in dem Koppelement eingehängt ist. Der Nippel kann mit dem Seil verpresst und/oder verklebt sein.

Der Riemen kann mittels des ersten Koppelelements am zweiten Säulenteil befestigt sein. Dies vereinfacht das Einrichten der Verbindung von Riemen und zweitem Säulenteil. Vorteilhaft greifen keine zusätzlichen Befestigungsmittel am Riemen an. Der für die Höhenverstellung nutzbare Längenbereich des Riemens wird nicht weiter als für die Verbindung der Riemenabschnitte nötig eingeschränkt.

Wenn das zweite Säulenteil innerhalb des ersten Säulenteils geführt ist, kann das erste Koppelelement unmittelbar an dem zweiten Säulenteil befestigt sein. Dies ermöglicht ein besonders einfaches Einrichten der Verbindung von Riemen und erstem Säulenteil. Zudem kann eine hohe Steifigkeit der Ankopplung erhalten werden, was die Präzision der Synchronisierung der beiden Säulen verbessert und ein Absinken der ersten Säulenteile aufgrund elastischer Verformung bei Belastung des Tischgestells verringern kann.

Insbesondere kann das Koppelelement mit dem zweiten Säulenteil verschraubt sein. Alternativ könnte das Koppelement an dem zweiten Säulenteil eingehakt oder verrastet sein.

Wenn alternativ das erste Säulenteil innerhalb des zweiten Säulenteils geführt ist, kann ein Befestigungsstab vom äußerem, zweitem Säulenteil aus an der Umlenkrolle vorbeiragen. Der Riemen kann dann, insbesondere mittels des ersten Koppelelements an dem Befestigungsstab fixiert werden, wobei der Befestigungsstab am zweiten Säulenteil befestigt ist, insbesondere an einem Boden des zweiten Säulenteils.

Das erste Koppelement kann formschlüssig und/oder stoffschlüssig an den Eingriffselementen des ersten Riemenabschnitts fixiert sein. Derart kann eine belastbare Verbindung erhalten werden. Das Koppelelement kann Fixierelemente, beispielsweise Zähne, aufweisen, die formschlüssig zwischen die Eingriffselemente des ersten Riemenabschnitts eingreifen. Alternativ oder zusätzlich kann das Koppelement mit dem ersten Riemenabschnitt verklebt oder verschweißt sein.

Das erste Koppelelement kann als Spannschloss ausgebildet sein. Das Koppelelement ermöglicht dann ein Einstellen der Spannung des Riemens. Hierzu ist der Abstand der Angriffsstellen von erstem und zweitem Riemenabschnitt am ersten Koppelelement veränderlich. Beispielsweise kann eine der Angriffsstellen über eine Schraube an einem Grundkörper des Koppelelements abgestützt sein. Die andere Angriffsstelle kann feststehend am Grundkörper, insbesondere durch den Grundkörper selbst, ausgebildet sein.

Ein zweites Koppelelement kann zweite Enden der voneinander separaten Riemenabschnitte miteinander verbinden. Derart kann ein umfänglich geschlossener Riemen mit den beiden Riemenabschnitten erhalten werden. Im Hinblick auf die Befestigung der beiden Riemenabschnitte an dem zweiten Koppelelement kann das zweite Koppelement wie das erste Koppelelement ausgebildet sein. Insofern sei auf die obige Beschreibung verwiesen. Ebenso kann das zweite Koppelelement alternativ oder zusätzlich zum ersten Koppelelement als ein Spannschloss ausgebildet sein.

Das Antriebsritzel und die Umlenkrolle können auf einer gemeinsamen Halteschiene montiert sein. Die Halteschiene ist am ersten Säulenteil befestigt. Insbesondere wenn das zweite Säulenteil innerhalb des ersten Säulenteils geführt ist, kann die Halteschiene in das zweite Säulenteil eingreifen. Die Halteschiene kann hierzu nur in einem oberen Bereich mit dem ersten Säulenteil verbunden sein. Der Riementrieb kann außerhalb der Säule an der Halteschiene vormontiert werden. Hierbei ist die Zugänglichkeit verbessert und ggf. das Einstellen der Riemenspannung vereinfacht. Ein Abstand von Antriebsritzel und Umlenkrolle kann einstellbar sein. Insbesondere kann eine Achse der Umlenkrolle in unterschiedlichen Abständen zum Antriebsritzel an der Halteschiene fixierbar sein. Bei der Montage in der jeweiligen Säule braucht nur noch der Riemen mit dem zweiten Säulenteil verbunden zu werden und die Halteschiene am ersten Säulenteil angebracht zu werden.

Wenn das erste Säulenteil innerhalb des zweiten Säulenteils geführt ist, können das Antriebsritzel und die Umlenkrolle unmittelbar oder mittels einer Halteschiene am ersten Säulenteil befestigt sein.

Ein Durchmesser der Umlenkrolle kann kleiner sein als ein Durchmesser des Antriebsritzels. Dies schafft Bauraum für weitere Komponenten, beispielsweise eine Gasdruckfeder. Der Durchmesser der Umlenkrolle kann ohne nachteilige Auswirkungen auf die Laufeigenschaften beim Höhenverstellen der Säule (weiches, reibungsarmes und ruckfreies Ein- bzw. Ausfahren) verringert werden, da der zweite Riemenabschnitt erfindungsgemäß glatt ausgebildet ist.

Der Durchmesser beschreibt insbesondere eine geometrisch größte Ausdehnung von Antriebsritzel und Umlenkrolle in radialer Richtung zu ihren jeweiligen Achsen. Der Durchmesser der Umlenkrolle kann insbesondere höchstens 80 %, vorzugsweise höchstens 70 %, des Durchmessers des Antriebsritzels betragen. Ein jeweiliger funktionaler Durchmesser, etwa ein Teilkreisdurchmesser des Antriebsritzels oder ein Abrolldurchmesser einer in Umfangsrichtung umlaufenden Nut der Umlenkrolle kann kleiner sein als der jeweilige Außendurchmesser. Es versteht sich, dass in der Regel auch der funktionale Durchmesser der Umlenkrolle kleiner ist als der funktionale Durchmesser des Antriebsritzels, wenn dies entsprechend für den geometrischen Außendurchmesser gilt.

Eine Achse der Umlenkrolle kann quer zur Richtung der Teleskopierbewegung der Säule (entsprechend der Höhenrichtung des Tischgestells in Gebrauchsstellung) gegenüber einer Achse des Antriebsritzels versetzt sein. Auch dadurch kann Bauraum für weitere Komponenten, beispielsweise eine Gasdruckfeder, geschaffen werden. Wenn die Umlenkrolle einen kleineren Durchmesser besitzt als das Antriebsritzel, kann ein besonders großer Achsversatz eingerichtet sein. Dann wird besonders viel zusätzlicher Bauraum frei.

Auch wenn die Umlenkrolle gegenüber dem Antriebsritzel versetzt ist oder einen kleineren Durchmesser aufweist, verläuft der Riemen in demjenigen Trum, welches an dem zweiten Säulenteil befestigt ist, typischerweise parallel zur Verschieberichtung der beiden Säulenteile relativ zu einander.

Das Tischgestell kann eine, vorzugsweise blockierbare, Gasdruckfeder aufweisen, welche sich zwischen dem ersten und dem zweiten Säulenteil einer der Säulen abstützt. Die Gasdruckfeder kann das Gewicht einer Tischplatte und des höhenveränderlichen Teils des Tischgestells bei der Höhenverstellung zumindest teilweise kompensieren. Durch Blockieren der Gasdruckfeder kann das Tischgestell in verschiedenen Höhen fixiert werden. Die Synchronisierung der beiden Tischbeine über die Teleskopantriebe und die Welle stellt sicher, dass beide Säulen gleichmäßig ein- und ausfahren. Zudem kann aufgrund der Kopplung auch die zweite Säule, in welcher keine blockierbare Gasdruckfeder angeordnet ist, nicht absinken oder ausfahren, wenn die Gasdruckfeder in der ersten Säule blockiert ist.

Das Tischgestell kann einen Längsträger aufweisen, der die beiden Säulen miteinander verbindet. Die Säulen können vorteilhaft unabhängig voneinander an dem Längsträger befestigbar sein. Insbesondere können die Säulen durch eine Schwenkbewegung an dem Längsträger verrastbar sein.

Das Tischgestell kann zwei sich quer zu dem Längsträger erstreckende Querträger aufweisen. Die Querträger können jeweils an einer der Säulen und/oder an dem Längsträger befestigt sein.

Die Welle kann an Achsstummeln der beiden Antriebsritzel mit einer Montagebewegung in radialer Richtung montierbar sein. Es können dann zunächst die beiden Säulen an einem Längsträger oder einer Tischplatte befestigt werden und sodann kann die Welle mit den beiden Achsstummeln verbunden werden.

Die Säulen könnten jeweils ein drittes Säulenteil aufweisen, welches relativ zu dem jeweiligen zweiten Säulenteil verschieblich ist. Durch einen beispielsweise aus DE 10 2009 007 125 A1 bekannten Schubstangenantrieb können die dritten Säulenteile ein- und ausgefahren werden, wenn die ersten Säulenteile relativ zu den zweiten Säulenteilen verschoben werden. Derart kann der Hub der Säulen vergrößert werden. Vorteilhaft genügen jedoch zwei Säulenteile pro Säule für eine ausreichende Höhenverstellung, wodurch die Komplexität des Tischgestells verringert und zusätzliche Reibung durch weitere bewegliche Komponenten vermieden wird.

Die Erfindung betrifft ferner eine Säule mit zwei relativ zueinander verschieblichen Säulenteilen, wobei an einem ersten Säulenteil ein Antriebsritzel und eine Umlenkrolle eines Teleskopantriebs drehbar gelagert sind, über welche ein Riemen des Teleskopantriebs geführt ist, wobei der Riemen an einem zweiten der Säulenteile befestigt ist, wobei an dem Riemen ein erster Riemenabschnitt mit Eingriffselementen ausgebildet ist, die formschlüssig mit Gegeneingriffselementen des Antriebsritzels zusammenwirken, und wobei an dem Riemen ein zweiter, glatter Riemenabschnitt ausgebildet ist, der über die Umlenkrolle geführt ist. Die Säule kann bei einem oben beschriebenen, erfindungsgemäßen Tischgestell verwendet werden. Für weitere vorteilhafte Merkmale der Säule sei auf die vorstehende Beschreibung der Säulen des erfindungsgemäßen Tischgestells verwiesen.

In den Rahmen der vorliegenden Erfindung fällt auch ein Tisch mit einem oben beschriebenen, erfindungsgemäßen Tischgestell und einer Tischplatte. Die Tischplatte kann an den Querträgern und/oder dem Längsträger gehalten sein.

Weitere Merkmale und Vorteile der Erfindung ergeben sich aus der Beschreibung, den Ansprüchen und der Zeichnung. Erfindungsgemäß können die vorstehend genannten und die noch weiter ausgeführten Merkmale jeweils einzeln für sich oder zu mehreren in beliebigen, zweckmäßigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Fig. 1: zeigt einen erfindungsgemäßen Tisch mit erfindungsgemäßes Tischgestell mit zwei erfindungsgemäßen Säulen in einer schematischen, teilgeschnittenen Perspektivansicht;
- Fig. 2: zeigt einen Riementrieb einer der Säulen des Tischs von Figur 1, in einer schematischen Perspektivansicht;
- Fig. 3: zeigt eine weitere schematische Perspektivansicht des Riementriebs von Figur 2;
- Fig. 4: zeigt einen ersten Riemenabschnitt in Form eines Zahnriemens und einen zweiten Riemenabschnitt in Form eines Seils für den Riemen des Riementriebs von Figur 2, in einer schematischen Perspektivansicht;
- Fig. 5: zeigt einen ähnlichen Riementrieb wie in Figur 2, für ein erfindungsgemäßes Tischgestell, in einer schematischen Perspektivansicht;
- Fig. 6: zeigt einen Riementrieb für ein erfindungsgemäßes Tischgestell mit einem ersten Riemenabschnitt in Form eines Lochbandes und einem zweiten Riemenabschnitt in Form eines Seils, in einer schematischen Perspektivansicht;
- Fig. 7: zeigt einen Riementrieb mit einem teilverzahnten, durchgängigen Riemen, für ein erfindungsgemäßes Tischgestell, in einer schematischen Perspektivansicht;
- Fig. 8: zeigt den Riemen des Riementriebs von Figur 7, in einer schematischen Perspektivansicht;
- Fig. 9: zeigt einen Riemen für ein erfindungsgemäßes Tischgestell wobei ein Riemenabschnitt durch ein Seil gebildet ist, welches in einen Zahnriemenabschnitt eingebettet ist, in einer schematischen Perspektivansicht;
- Fig. 10: zeigt einen Riementrieb mit einem Riemen ähnlich dem von Figur 9, wobei Enden des Seils durch ein Spannschloss miteinander verbunden sind, in einer schematischen Perspektivansicht;
- Fig. 11: zeigt eine Prinzipskizze einer erfindungsgemäßen Säule;
- Fig. 12: zeigt eine Prinzipskizze einer weiteren erfindungsgemäßen Säule.

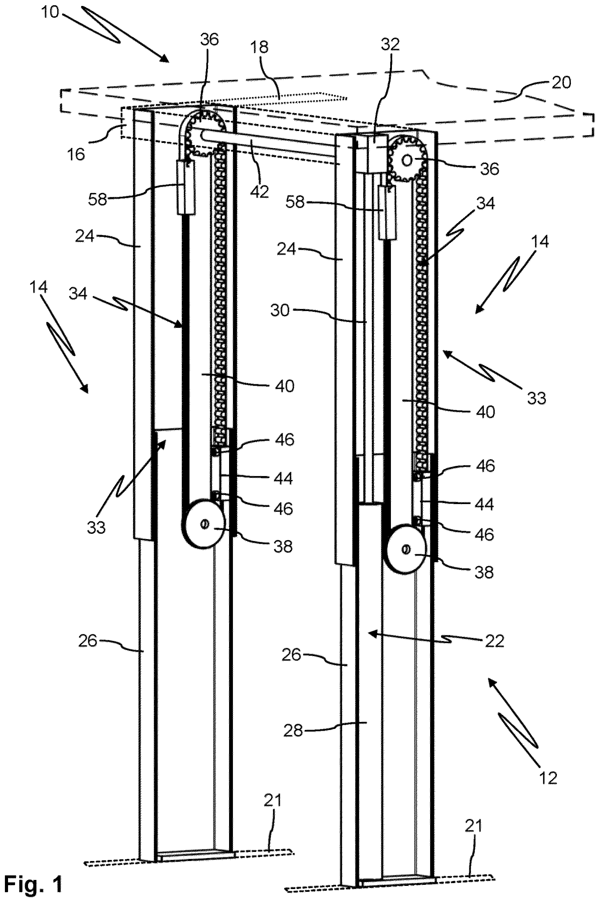

**Figur 1** zeigt einen Tisch **10** mit einem Tischgestell **12.** Zwei teleskopierbare Säulen **14** sind über einen Längsträger **16** (punktiert angedeutet) miteinander verbunden. Querträger **18,** von denen nur einer punktiert angedeutet ist, können an dem Längsträger 16 befestigt sein. Eine (hier nur teilweise dargestellte) Tischplatte **20** ist auf den Säulen 14, insbesondere über den Längsträger 16 und/oder die Querträger 18 abgestützt. Die Säulen 14 können jeweils Fußausleger **21** (punktiert angedeutet) aufweisen.

In einer der Säulen 14 ist eine blockierbare Gasdruckfeder **22** angeordnet. Die Gasdruckfeder 22 unterstützt eine Längenveränderung der Säulen 14 bzw. Höhenverstellung des Tisches 10.

Im Übrigen sind die beiden Säulen 14 bei der dargestellten Ausführungsform baugleich. Es werden daher dieselben Bezugszeichen verwendet, ohne zwischen den beiden Säulen 14 zu unterscheiden.

Die Säulen 14 weisen jeweils eine erstes, hier oberes, Säulenteil **24** und ein zweites, hier unteres, Säulenteil **26** auf. Die beiden Säulenteile 24, 26 sind für eine Höhenverstellung bzw. Längenveränderung ineinander einführbar bzw. auseinander herausziehen. Bei dieser Ausführungsform ist das zweite Säulenteil 26 jeweils innerhalb des ersten Säulenteils 24 geführt.

Die Säulenteile 24, 26 weisen hier jeweils einen Rechteck-Querschnitt auf. Der Übersichtlichkeit halber sind die Säulenteile 24, 26 nur teilweise dargestellt, insbesondere ist eine dem Betrachter zugewandte Seitenfläche der Rechteck-Rohre, welche hier die Säulenteile 24, 26 bilden, jeweils nicht gezeigt, um den Blick auf innerhalb der Säulen 14 angeordnete Komponenten freizugeben. Es versteht sich, dass die Säulenteile auch andere Querschnittsformen aufweisen könnten.

Vorliegend ist ein Zylinder **28** der Gasdruckfeder 22 am Boden des zweiten Säulenteils 26 einer der Säulen 14 abgestützt. Eine Kolbenstange **30** der Gasdruckfeder 22 ist oberends am ersten Säulenteil 24 an einem Auslöser **32** für die Blockierfunktion abgestützt.

Alternativ könnte der Zylinder der Gasdruckfeder oben am ersten Säulenteil abgestützt sein und die Kolbenstange unten am zweiten Säulenteil (nicht näher dargestellt). In diesem Fall könnte eine Fußauslösung, etwa mittels eines Pedals, vorgesehen sein.

In beiden Säulen 14 ist ein Teleskopantrieb **33** eingebaut. Ein Riemen **34** ist jeweils über ein Antriebsritzel **36** und eine Umlenkrolle **38** geführt. Das Antriebsritzel 36 und die Umlenkrolle 38 sind jeweils auf einer Halteschiene **40** montiert. Die Halteschiene 40 ist oberenends am ersten Säulenteil 24 befestigt. Unterenends greift die Halteschiene 40 mit der Umlenkrolle 38 in das zweite Säulenteil 26 ein. Die beiden Antriebsritzel 36 sind durch eine Welle **42** gekoppelt, sodass sie sich nur gemeinsam drehen können. Eine Stelle des Riemens 34 ist jeweils an dem zweiten Säulenteil 36 befestigt. Vorliegend ist ein erstes Koppelelement **44** des Riemens 34 über Schrauben **46** unmittelbar an der Wand des zweiten Säulenteile 36 festgelegt. Bei der Höhenverstellung bewegt sich das erste Koppelement 44 zwischen der Umlenkrolle 38 und dem Antriebsritzel 36 nach oben oder unten.

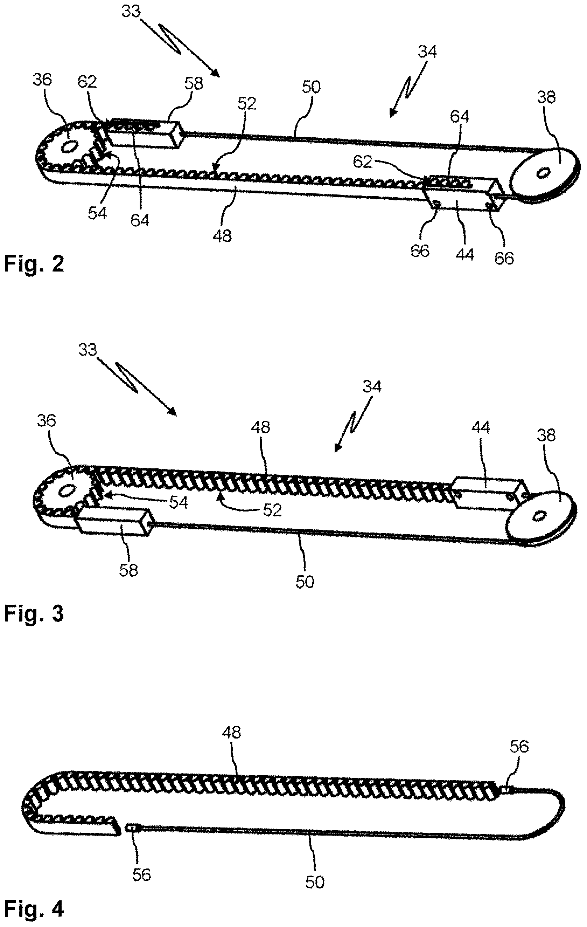

Die **Figuren 2** und **3** zeigen einen der Teleskopantriebe 33 in Alleinstellung von unterschiedlichen Seiten. Der Riemen 34 umfasst einen ersten und einen zweiten Riemenabschnitt **48, 50,** die sich in ihrer Gestaltung unterscheiden. Der Riemen 34 kann daher auch als ein Hybrid-Riemen bezeichnet werden.

Der erste Riemenabschnitt 48 ist durch einen Zahnriemen mit Eingriffselementen **52** in Form von Zähnen gebildet. Der zweite Riemenabschnitt 50 ist durch ein Seil, beispielsweise ein Stahlseil oder ein Kunstfaserseil, gebildet. In seiner Erstreckungsrichtung (entsprechend der Umfangsrichtung des Riemens 34) weist das Seil einen gleichbleibenden Durchmesser auf; es ist mit anderen Worten glatt.

Das Antriebsritzel 36 ist korrespondierend zu dem ersten Riemenabschnitt 48 als ein Zahnrad mit Gegeneingriffselementen **54** in Form von Zähnen ausgebildet. Die Zähne des Antriebsritzels 36 und des ersten Riemenabschnitts 48 greifen formschlüssig ineinander.

Die Umlenkrolle 38 ist korrespondierend zu dem zweiten Riemenabschnitt 50 als eine Seilscheibe mit einer vertieften Nut zur seitlichen Führung des Seils ausgebildet.

In **Figur 4****,** welche nur die beiden Riemenabschnitte 48, 50 zeigt, ist zu erkennen, dass an den beiden Enden des Seils, welches den zweiten Riemenabschnitt 50 bildet, jeweils ein gegenüber dem Durchmesser des Seils verdickter Nippel **56** angebracht ist. Die Seilenden können in die Nippel 56 hineinragen. Durch radiales Zusammenpressen des jeweiligen Nippels 56 kann eine feste Verbindung mit dem Seil erhalten sein.

Die beiden Riemenabschnitte 48, 50 sind mittels des ersten Koppelelements 44 und eines zweiten Koppelelements **58** miteinander verbunden, vergleiche Figuren 1 bis 3. Der Riemen 34 ist somit umfänglich geschlossen. Die zweiten Koppelelemente 58 sind - anders als die ersten Koppelelemente 44 - weder an dem ersten noch an dem zweiten Säulenteil 24, 26 fixiert, sondern relativ zu beiden Säulenteilen 24, 26 beweglich.

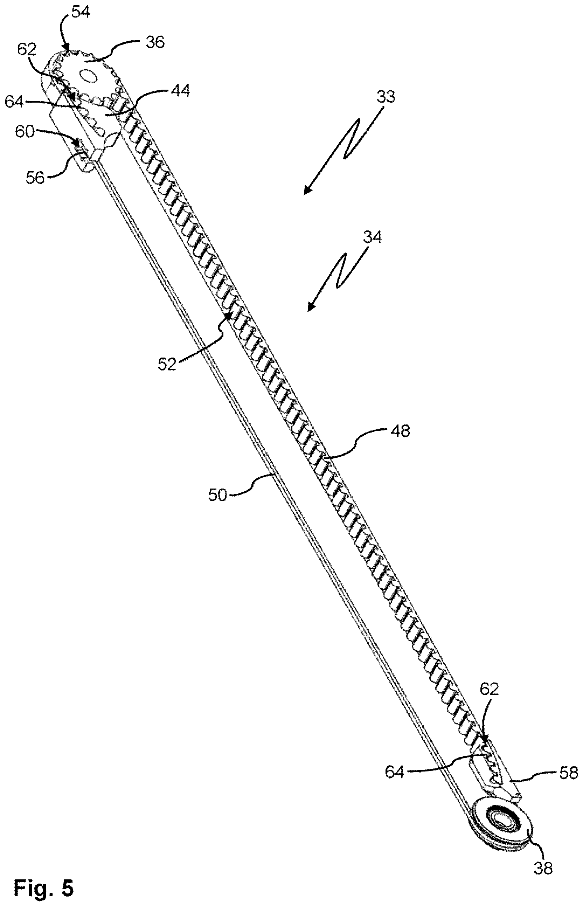

Die Nippel 56 an den beiden Enden des zweiten Riemenabschnitts 50 sind jeweils in eine korrespondierende Ausnehmung **60** der Koppelelemente 44, 58 eingehängt, wie dies in **Figur 5** für einen ähnlichen Riemen 34 zu erkennen ist.

Die Koppelelemente 44, 50 weisen jeweils einen zu einer Seite hin offenen Schlitz **62** mit zahnförmigen Fixierelementen **64** auf, vergleiche Figuren 2 und 5. Zur anderen Seite hin ist der Schlitz 62 geschlossen, vergleiche Figur 3. Zur Montage wird der zweite Riemenabschnitt 50 von der offenen Seite her in den Schlitz 62 eingeschoben. Die Fixierelemente 64 greifen somit formschlüssig in die Eingriffselemente 52 ein. Zusätzlich kann der zweite Riemenabschnitt 50 mit den Koppelelementen 44, 58 verklebt oder verschweißt werden, z.B. mittels 2-Komponenten-Klebstoff oder durch Ultraschallschweißen.

Das erste Koppelelement 44 weist Durchgangslöcher **66** für die Schrauben 46 zur Befestigung am zweiten Säulenteil 26 auf. Vorliegend ist das zweite Koppelelement 58 ohne solche durch Durchgangslöcher ausgebildet. Das zweite Koppelement könnte aber auch baugleich zum ersten Koppelelement 44 sein, ohne dass beim zweiten Koppelement die Durchgangslöcher 66 genutzt werden.

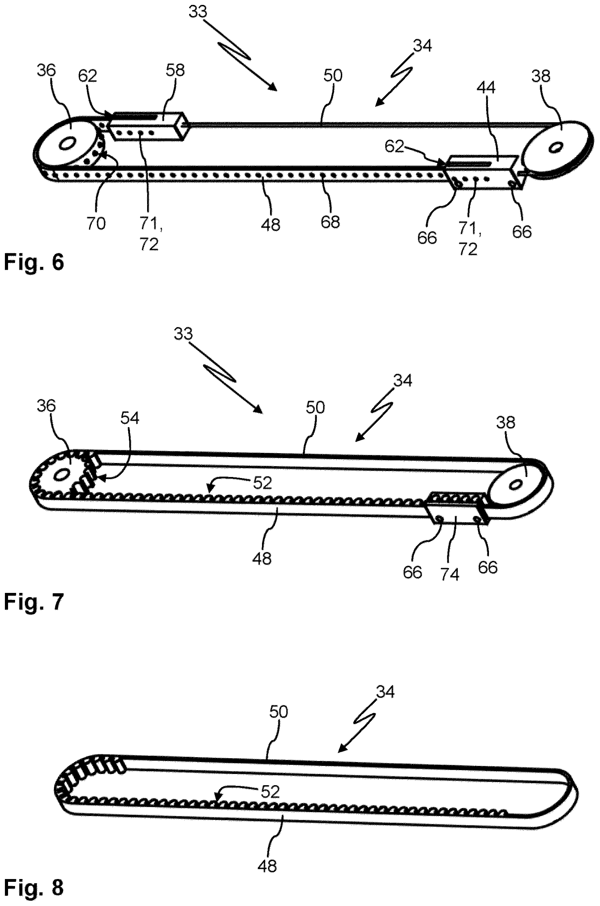

**Figur 6** zeigt einen weiteren Teleskopantrieb 33, der in vielen Aspekten dem in den Figuren 2 und 3 gezeigten Teleskopantrieb 33 entspricht. Nachfolgend werden vorrangig die Unterschiede erläutert. Im Übrigen sei auf die obige Beschreibung verwiesen.

Der erste Riemenabschnitt 48 ist hier als ein gelochtes Band, beispielsweise ein Stahlband, ausgebildet. Die Eingriffselemente **68** sind als Löcher im ansonsten flachen Band ausgebildet. Gegeneingriffselemente **70** des Antriebsritzels 34 sind entsprechend als Zähne oder Zacken mit hier rundem Querschnitt ausgebildet. In Bohrungen **71** der Koppelelemente 44, 58 können als Fixierelemente **72** Stifte eingeschoben sein, um den ersten Riemenabschnitt 48 formschlüssig an den Koppelelementen 44, 58 zu fixieren.

**Figur 7** zeigt einen weiteren Teleskopantrieb 33, der in einigen Aspekten dem in den Figuren 2 und 3 gezeigten Teleskopantrieb 33 entspricht. Nachfolgend werden vorrangig die Unterschiede erläutert. Im Übrigen sei auf die obige Beschreibung verwiesen.

Bei dem Teleskopantrieb 33 von Figur 7 ist der Riemen 34 in sich umlaufend geschlossen, siehe auch **Figur 8****.** In einem ersten Riemenabschnitt 48 sind Zähne als Eingriffselemente 52 vorgesehen. In einem zweiten Riemenabschnitt 50 ist der Riemen 34 als Flachriemen oder mit anderen Worten Flachband ausgebildet. Der Riemen 34 weist umlaufende Verstärkungsfasern auf, welche mit Kunststoffmaterial umspritzt sind - die Verstärkungsfasern sind daher in den Figuren 7 und 8 nicht zu erkennen.

Zur Umlenkung des Riemens 34 im zweiten Riemenabschnitt 50 ist die Umlenkrolle 38 als Riemenscheibe mit zylindrischer Mantelfläche ausgebildet.

Zur Befestigung des Riemens 34 an dem zweiten Säulenteil (vergleiche insofern Figur 1 und die zugehörige Beschreibung) ist ein Halteelement **74** vorgesehen. Durchgangslöcher 66 ermöglichen es, das Halteelement 74 mit dem zweiten Säulenteil 26 zu verschrauben.

Das Halteelement 74 ist an einem Ende des ersten Riemenabschnitts 48 angeordnet. Das Halteelement 74 weist einen Schlitz 62 auf, der zu einer Seite hin und in Umfangsrichtung des Riemens 34 an seinen beiden Stirnflächen offen ist. Zahnförmige Fixierelemente 52 an der Innenseite des Schlitzes 62 greifen formschlüssig zwischen die Eingriffselemente (Zähne) 52 des ersten Riemenabschnitts 48. Zusätzlich kann der Riemen stoffschlüssig mit dem Halteelement 74 verbunden sein, beispielsweise verklebt oder verschweißt.

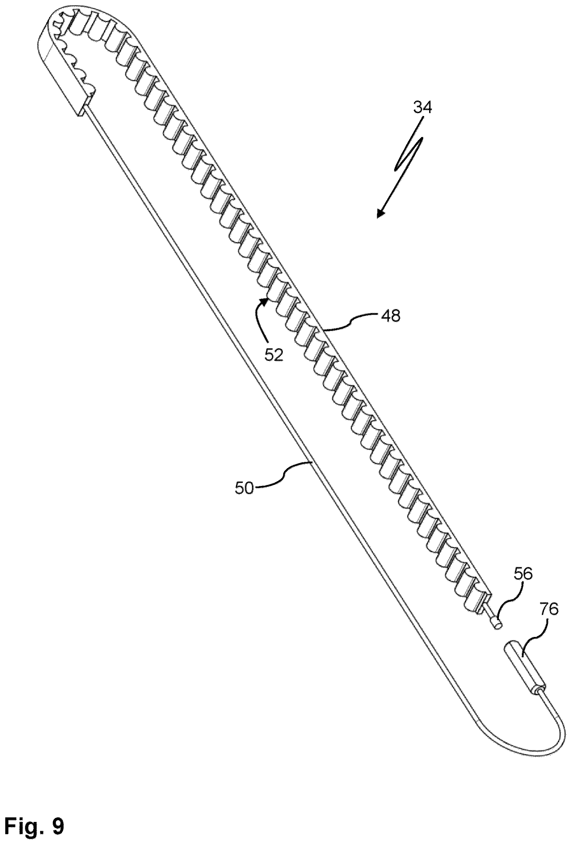

**Figur 9** zeigt einen weiteren Riemen 34, der in einigen Aspekten dem in den Figuren 2 und 3 gezeigten Riemen 34 entspricht. Nachfolgend werden vorrangig die Unterschiede erläutert. Im Übrigen sei auf die obige Beschreibung verwiesen.

Ein erster Riemenabschnitt 48 ist als Zahnriemen mit Zähnen als Eingriffselementen 52 ausgebildet. In den verzahnten ersten Riemenabschnitt 48 ist ein Seil, beispielsweise ein Stahlseil oder Kunstfaserseil, eingebettet. An den Enden des ersten Riemenabschnitts 48 ragt das Seil aus dem verzahnten Bereich des Riemens 34 heraus und bildet einen zweiten, glatten Riemenabschnitt 50. Weitere Verstärkungsfasern können sich innerhalb des ersten Riemenabschnitts 48 erstrecken, ohne aus diesem herauszuragen.

Ein erstes Ende des Seils steht nur geringfügig, beispielsweise 1 bis 3 cm, aus dem verzahnten ersten Riemenabschnitt 48 vor. Dieses erste Ende ist hier mit einem verdickten Nippel 56 versehen. Der Hauptteil des zweiten Riemenabschnitts 50 entspringt anderenends aus dem ersten Riemenabschnitt 48. Ein zweites Ende des mit dem Seil gebildeten zweiten Riemenabschnitts 50 weist eine Muffe **76** zur Verbindung mit dem Nippel 56 auf. Der Nippel 56 kann in die Muffe 76 eingehängt werden, um den Riemen 34 zu schließen.

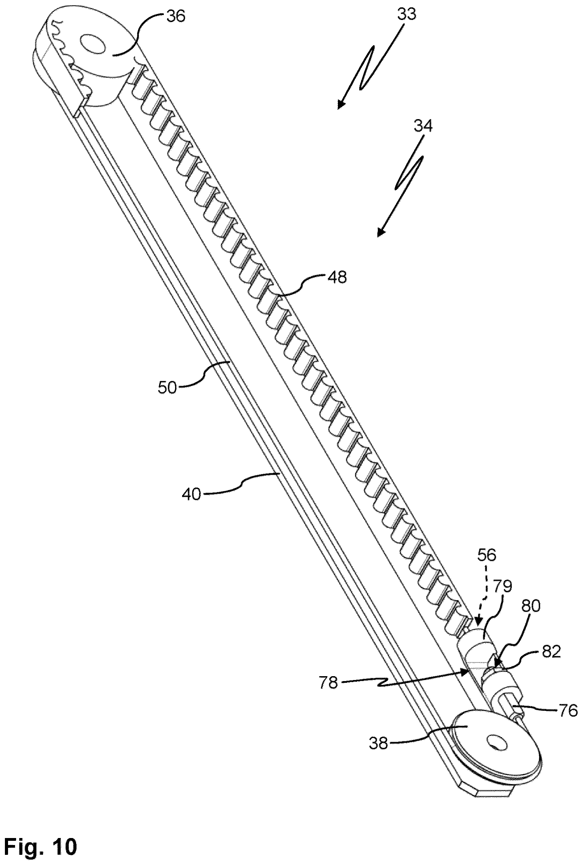

**Figur 10** zeigt einen Teleskopantrieb 33 mit einem Riemen 34 der weitgehend dem in Figur 9 gezeigten Riemen entspricht. Insofern sei auf die obige Beschreibung verwiesen. Nachfolgend werden vorrangig die Unterschiede erläutert.

Zum Schließen des Riemens 34 ist hier ein Koppelelement **78** vorgesehen, das als Spannschloss ausgebildet ist. An einer Seite des Koppelelements 78 ist der Nippel 56 in einen Grundkörper **79** eingehängt. Die Muffe 76 weist hier einen Gewindeabschnitt **80** auf. Eine Mutter **82** ist auf den Gewindeabschnitt aufgeschraubt und stützt sich an dem Grundkörper 79 des Koppelelements 78 ab. Durch Drehen der Mutter 82 gegenüber der Muffe 76 kann die Länge des Riemens 34 verändert werden, sodass dessen Spannung eingestellt werden kann, wenn der Riemen 34 über das Antriebsritzel 36 und die Umlenkrolle 38 geführt ist, welche in einem festen Abstand zueinander drehbar gelagert sind, beispielsweise an einer Halteschiene 40. Das Koppelelement 78 kann ferner zur Befestigung des Riemens 34 am zweiten Säulenteil 26 dienen.

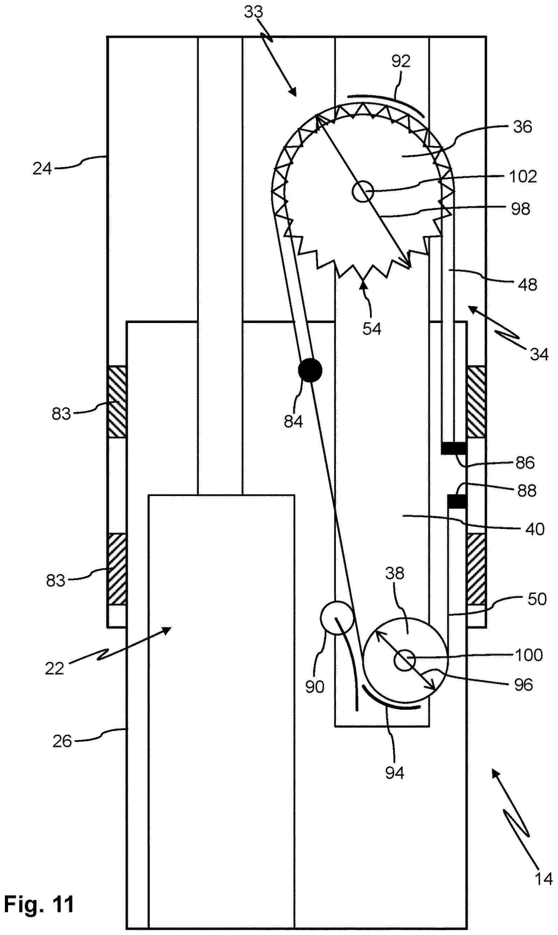

**Figur 11** zeigt eine Säule 14. Ein zweites Säulenteil 26 ist über Lager **83,** hier Wälzlager, vorzugsweise Rollenlager (hier nur symbolisch dargestellt), verschieblich innerhalb eines ersten Säulenteils 24 geführt. Alternativ könnten Gleitlager vorgesehen sein. Eine blockierbare Gasdruckfeder 22 stützt sich zwischen den beiden Säulenteilen 24, 26 ab.

Mittels einer Halteschiene 40 sind ein Antriebsritzel 36 und eine Umlenkrolle 38 an dem ersten Säulenteil 24 befestigt. Ein Riemen 34, welcher hier einen ersten Riemenabschnitt 48 in Form einer Kette und einen zweiten Riemenabschnitt 50 in Form eines Seils aufweist ist über das Antriebsritzel 36 und die Umlenkrolle 38 geführt. Zähne als Gegeneingriffselemente 52 des Antriebsritzels 36 sind in Figur 11 nur symbolisch dargestellt. Bei der Kette sind der Übersichtlichkeit halber die einzelnen Laschen und Bolzen, welche als Eingriffselemente fungieren, nicht dargestellt. An einem ihrer jeweiligen Enden sind das Seil und die Kette durch ein Koppelelement **84** miteinander verbunden. Freie Enden des ersten und zweiten Riemenabschnitts 48, 50, d. h. der Kette und des Seils, sind bei dieser Ausführungsform unabhängig voneinander an dem zweiten Säulenteil 26 befestigt; hierzu sind zwei Befestigungselemente **86, 88** vorgesehen.

An der Halteschiene 40 kann eine Spannrolle **90** federnd abgestützt sein, um gegen den zweiten Riemenabschnitt 50 zu drücken. Dadurch kann der Riemen 34 gespannt werden.

Führungselemente **92, 94** können ein Ablaufen des ersten und zweiten Riemenabschnitts 48, 50 von dem Antriebsritzel 36 bzw. der Umlenkrolle 38 verhindern.

Ein Durchmesser **96** der Umlenkrolle 38 ist bei der gezeigten Ausführungsform kleiner als ein Durchmesser **98** des Antriebsritzels 36. Zudem ist die Achse **100** der Umlenkrolle 38 gegenüber der Achse **102** des Antriebsritzels 36 versetzt, hier von der Gasdruckfeder 22 weg. Diese beiden Maßnahmen schaffen Platz, um beispielsweise die Gasdruckfeder 22 oder andere Komponenten in der Säule 14 unterzubringen.

Es sei angemerkt, dass unterschiedliche Durchmesser von Umlenkrolle 28 und Antriebsritzel 36 sowie ein Achsversatz auch bei den zuvor beschriebenen Ausführungsformen eingerichtet sein könnten.

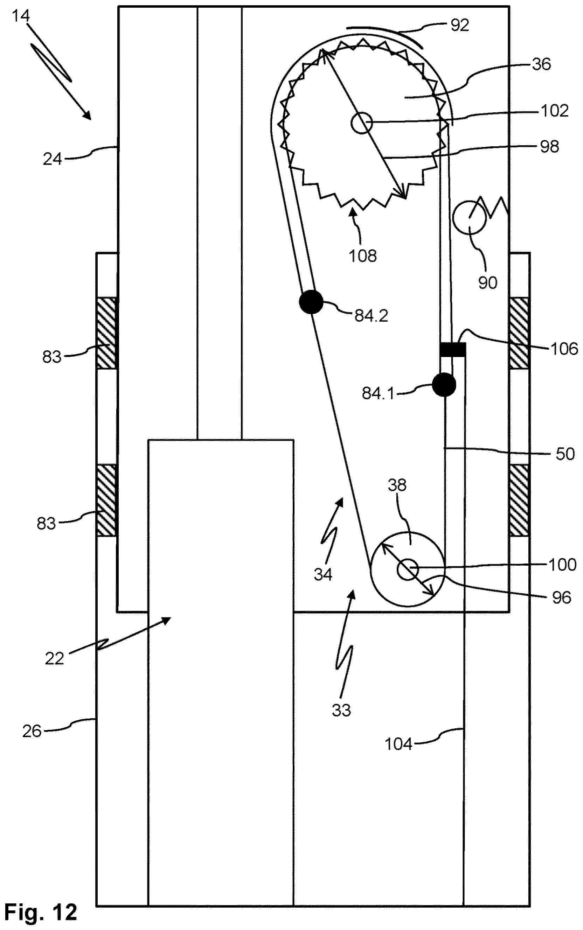

**Figur 12** zeigt eine weitere Säule 14, die in einigen Aspekten der Säule 14 aus Figur 11 entspricht. Insofern sei auf die obige Beschreibung verwiesen. Nachfolgend werden vorrangig die Unterschiede erläutert.

Bei dieser Ausführungsform ist das erste Säulenteil 24 innerhalb des zweiten Säulenteils 26 geführt. Die Achsen 102, 100 des Antriebsritzels 36 und der Umlenkrolle 38 sind direkt an dem ersten Säulenteil 24 befestigt. Die beiden Riemenabschnitte 48, 50 sind jeweils beidenends durch zwei Koppelelemente **84.1, 84.2** miteinander verbunden. Vom Boden des zweiten Säulenteils 26 aus ragt ein Befestigungsstab **104** an der Umlenkrolle 38 vorbei ins erste Säulenteil 24 hinein. Der Riemen 34 ist neben dem ersten Koppelelement 84.1 über ein Befestigungselement **106** an dem Befestigungsstab 104 fixiert. Alternativ könnte auch das erste Koppelelement 84.1 zur Befestigung an dem Befestigungsstab 104 dienen (nicht näher dargestellt).

Vorliegend ist der erste Riemenabschnitt 48 durch ein Noppenband gebildet, wobei zu dem Antriebsritzel hin vorstehende Noppen nicht im Einzelnen dargestellt sondern nur eine Gesamtdicke des Noppenbands angedeutet ist. Entsprechend weist das Antriebsritzel 36 als Gegeneingriffselemente **108** symbolisch dargestellte Vertiefungen auf.

Eine Spannrolle 90 ist hier an dem ersten Säulenteil 24 federnd abgestützt. Die Spannrolle 90 kann unter Vorspannung an dem ersten Riemenabschnitt 48 anliegen.

Zusammenfassend betrifft die Erfindung einen Riemen mit zwei Segmenten. Ein erstes Segment des Riemens ist mit Eingriffselementen versehen, für ein formschlüssiges Zusammenwirken mit Gegeneingriffselementen eines Antriebsritzels. Ein zweites Segment des Riemens weist entlang seiner Längenerstreckung eine konstante Dicke auf - es ist mit anderen Worten glatt. Eine Umlenkrolle dient zur Umlenkung des Riemens im Bereich des zweiten Segments. In einer teleskopierbaren Säule sind das Antriebsritzel und die Umlenkrolle an einem der beiden Säulenteile befestigt. Der Riemen ist zwischen dem Antriebsritzel und der Umlenkrolle an einer Stelle an dem zweiten Säulenteil befestigt. Diese Befestigungsstelle bewegt sich beim Ein- und Ausfahren der Säulenteile zwischen dem Antriebsritzel und der Umlenkrolle. Das Antriebsritzel wird dann vom Riemen gedreht. Umgekehrt verschiebt eine Drehung des Antriebsritzels die Säulenteile gegeneinander. Eine zweite derartige Säule kann durch eine mit dem jeweiligen Antriebsritzel verbundene Welle mit der ersten Säule synchronisiert werden, sodass die Längen beider Säulen sich stets gemeinsam ändern. Die beiden Säulen können bei einem Tischgestell eines höhenverstellbaren Tischs verwendet werden.

### Bezugszeichenliste

Tisch **10**
Tischgestell **12**
Säule **14**
Längsträger **16**
Querträger **18**
Tischplatte **20**
Fußausleger **21**
Gasdruckfeder **22**
erstes Säulenteil **24**
zweites Säulenteil **26**
Zylinder **28**
Kolbenstange **30**
Auslöser **32**
Teleskopantrieb **33**
Riemen **34**
Antriebsritzel **36**
Umlenkrolle **38**
Halteschiene **40**
Welle **42**
erstes Koppelelement **44**
Schrauben **46**
erster Riemenabschnitt **48**
zweiter Riemenabschnitt **50**
Eingriffselemente (Zähne) **52**
Gegeneingriffselemente (Zähne) **54**
Nippel **56**
zweites Koppelelement **58**
Ausnehmung **60**
Schlitz **62**
Fixierelemente **64**
Durchgangslöcher **66**
Eingriffselemente (Löcher) **68**
Gegeneingriffselemente (Zähne/Zacken) **70**
Bohrungen **71**
Fixierelemente (Stifte) **72**
Halteelement **74**
Muffe **76**
Koppelelement **78**
Grundkörper **79**
Mutter **82**
Lager **83**
Koppelelement **84; 84.1, 84.2**
Befestigungselemente **86, 88**
Spannrolle **90**
Führungselemente **92, 94**
Durchmesser **96** der Umlenkrolle 38
Durchmesser **98** des Antriebsritzel 36
Achse **100** der Umlenkrolle 38
Achse **102** des Antriebsritzels 36
Befestigungsstab **104**
Befestigungselement **106**
Gegeneingriffselemente (Vertiefungen) **108**

## Patentansprüche

1. Tischgestell (12) aufweisend zwei teleskopierbare Säulen (14) mit je zwei relativ zueinander verschieblichen Säulenteilen (24, 26),
wobei jeweils an einem ersten, insbesondere oberen, Säulenteil (24) der beiden Säulen (14) ein Antriebsritzel (36) und eine Umlenkrolle (38) eines jeweiligen Teleskopantriebs (33) drehbar gelagert sind, über welche ein Riemen (34) des jeweiligen Teleskopantriebs (33) geführt ist,
wobei die Riemen (34) jeweils an einem zweiten, insbesondere unteren, der Säulenteile (26) befestigt sind,
wobei das Tischgestell (12) eine Welle (42) zur Drehkopplung der beiden Antriebsritzel (36) aufweist,
wobei an zumindest einem der Riemen (34), vorzugsweise an beiden Riemen (34), ein erster Riemenabschnitt (48) mit Eingriffselementen (52; 68) ausgebildet ist, die formschlüssig mit Gegeneingriffselementen (54; 70; 108) des Antriebsritzels (36) zusammenwirken,
und wobei an dem zumindest einen Riemen (34), vorzugsweise an beiden Riemen (34), ein zweiter, glatter Riemenabschnitt (50) ausgebildet ist, der über die Umlenkrolle (38) geführt ist.

2. Tischgestell (12) nach Anspruch 1, wobei der erste Riemenabschnitt (48) als Zahnriemen, gelochtes Band, Noppenband oder Kette ausgebildet ist.

3. Tischgestell (12) nach Anspruch 1 oder 2, wobei der zweite Riemenabschnitt (50) als Seil, insbesondere Drahtseil oder Kunstfaserseil, oder Flachband, insbesondere aus Stahl oder faserverstärktem Kunststoff, ausgebildet ist.

4. Tischgestell (12) nach einem der vorhergehenden Ansprüche, wobei das zweite Säulenteil (26) innerhalb des ersten Säulenteils (24) geführt ist.

5. Tischgestell (12) nach einem der Ansprüche 1 bis 4, wobei der Riemen (34) in sich umfänglich geschlossenen ist, und in dem ersten Riemenabschnitt (48) als Zahnriemen und in dem zweiten Riemenabschnitt als Flachriemen ausgebildet ist.

6. Tischgestell (12) nach einem der Ansprüche 1 bis 4, wobei ein erstes Koppelelement (44; 78; 84; 84.1) erste Enden der Riemenabschnitte (48, 50) miteinander verbindet.

7. Tischgestell (12) nach Anspruch 6, wobei der erste und der zweite Riemenabschnitt (48, 50) durch voneinander separate Teilstücke gebildet sind.

8. Tischgestell (12) nach Anspruch 6 oder 7, wobei der Riemen (34) mittels des ersten Koppelelements (44; 78) am zweiten Säulenteil (26) befestigt ist.

9. Tischgestell (12) nach Anspruch 8, wobei das zweite Säulenteil (26) innerhalb des ersten Säulenteils (24) geführt ist, und wobei das erste Koppelelement (44; 78) unmittelbar an dem zweiten Säulenteil (26) befestigt ist, insbesondere mit dem zweiten Säulenteil (26) verschraubt ist.

10. Tischgestell (12) nach einem der Ansprüche 6 bis 9, wobei das erste Koppelement (44; 84; 84.1) formschlüssig und/oder stoffschlüssig an den Eingriffselementen (52; 68) des ersten Riemenabschnitts (48) fixiert ist.

11. Tischgestell (12) nach einem der Ansprüche 6 bis 10, wobei das erste Koppelelement (78) als Spannschloss ausgebildet ist.

12. Tischgestell (12) nach einem der Ansprüche 7 bis 11, wobei ein zweites Koppelelement (58; 84.2) zweite Enden der voneinander separaten Riemenabschnitte (48, 50) miteinander verbindet.

13. Tischgestell (12) nach einem der vorhergehenden Ansprüche, wobei das Antriebsritzel (36) und die Umlenkrolle (38) auf einer gemeinsamen Halteschiene (40) montiert sind.

14. Tischgestell (12) nach einem der vorhergehenden Ansprüche, wobei ein Durchmesser (96) der Umlenkrolle (38) kleiner ist als ein Durchmesser (98) des Antriebsritzels (38).

15. Tischgestell (12) nach einem der vorhergehenden Ansprüche, wobei eine Achse (100) der Umlenkrolle (38) quer zur Richtung der Teleskopierbewegung gegenüber einer Achse (102) des Antriebsritzels (36) versetzt ist.

16. Tischgestell (12) nach einem der vorhergehenden Ansprüche, weiterhin aufweisend eine, vorzugsweise blockierbare, Gasdruckfeder (22), welche sich zwischen dem ersten und zweiten Säulenteil (24, 26) einer der Säulen (14) abstützt.

17. Säule (14), insbesondere für ein Tischgestell (12) nach einem der Ansprüche 1 bis 16, mit zwei relativ zueinander verschieblichen Säulenteilen (24, 26), wobei an einem ersten Säulenteil (24) ein Antriebsritzel (36) und eine Umlenkrolle (38) eines Teleskopantriebs (33) drehbar gelagert sind, über welche ein Riemen (34) des Teleskopantriebs (33) geführt ist, wobei der Riemen (34) an einem zweiten der Säulenteile (26) befestigt ist, wobei an dem Riemen (34) ein erster Riemenabschnitt (48) mit Eingriffselementen (52; 68) ausgebildet ist, die formschlüssig mit Gegeneingriffselementen (54; 70; 108) des Antriebsritzels (36) zusammenwirken, und wobei an dem Riemen (34) ein zweiter, glatter Riemenabschnitt (50) ausgebildet ist, der über die Umlenkrolle (38) geführt ist.

18. Tisch (10) mit einem Tischgestell (12) nach einem der Ansprüche 1 bis 16 und einer Tischplatte (20), vorzugsweise wobei die Tischplatte (20) an einem Längsträger (16) und/oder Querträgern (18) des Tischgestells (12) gehalten ist.
